# EUROPEAN PATENT SPECIFICATION

(11) **EP 0 711 061 B1**
(45) Date of publication and mention of the grant of the patent: **29.05.2002**
(21) Application number: 95117505.8
(22) Date of filing: 07.11.1995
(51) Int. Cl.: H04N 1/00

(54) **Image processing apparatus**
Bildverarbeitungsgerät
Appareil de traitement d'images

(30) Priority: 07.11.1994 JP 27229694
(43) Date of publication of application: 08.05.1996
(60) Divisional application: 01103638.1
(73) Proprietor: Ricoh Company, Ltd, Ohta-ku Tokyo 143 (JP)
(72) Inventor: Aida, Midori, c/o Ricoh Company, Ltd., Ohta-ku, Tokyo 143 (JP); Hashiguchi, Tadato, c/o Ricoh Company, Ltd., Ohta-ku, Tokyo 143 (JP); Ukai, Takeshi, c/o Ricoh Company, Ltd., Ohta-ku, Tokyo 143 (JP); Saito, Takashi, c/o Ricoh Company, Ltd., Ohta-ku, Tokyo 143 (JP); Yamaguchi, Yukio, c/o Ricoh Company, Ltd., Ohta-ku, Tokyo 143 (JP); Yamagata, Hideaki, c/o Ricoh Company, Ltd., Ohta-ku, Tokyo 143 (JP); Ito, Takanori, c/o Ricoh Company, Ltd., Ohta-ku, Tokyo 143 (JP)
(74) Representative: Schwabe - Sandmair - Marx

(56) References cited:
- EP-A- 0 342 060
- EP-A- 0 506 469
- EP-A- 0 654 934
- GB-A- 2 275 387

## Description

### FIELD OF THE INVENTION

This invention relates to an image processing apparatus for receiving image data from a scanner or an external device, subjecting inputted image data to various types of image processing, and then outputting the image data, and more particularly to an image processing apparatus having a function to determine whether inputted image data is for a specific draft inhibited to be copied such as bills and securities.

### BACKGROUND OF THE INVENTION

In recent years, in association with progress in the fields of image processing technology and image forming technology, it has become possible to form an image so exquisitely that sometimes a copied bill prepared with a color copying machine can not be distinguished from an actual bill. For this reason, and there have been developed apparatuses for determining specific drafts such as bills and securities and inhibiting the specific drafts to be copied illegally. Such an apparatus is described in EP-A-0 342 060.

However, with the conventional technology, apparatuses which inhibit output of an image when the image is determined as for a specific draft have been provided, but there has been no apparatus which allows output of an image in a case, for instance, where the image is to be processed by an external device, appending information that the image may be for a specific draft, on the condition that the image is not printed directly on recording paper.

Also with the conventional technology, determination as to whether an image is for a specific draft or not is executed based on inputted image data, but any particular consideration has not been taken to a case where an image may be treated as that for a specific draft or not as that for a specific draft by subjecting the image to particular deformation or processing such as size change, mirroring, inclination, color conversion, or painting.

Also there has not been provided any image forming apparatus in which a degree of severity in recognition of a specific draft can be changed according to user management or situation of use.

Also in the conventional technology, determination as to whether an image is for a specific draft or not is executed by comparing a certain threshold value and a degree of similarity, so that sometimes a draft to be suspected as a specific draft is determined as a non-specific draft because of a threshold value preset, and the similar images as described above have been processed based on the recognition that the images are not for specific draft.

### SUMMARY OF THE INVENTION

It is an object of the present invention to provide an image processing apparatus which allows output of doubtful image data in a case where the image data is processed by an external device appending information that the image data may be for a specific draft.

It is another object of the present invention to provide an image processing apparatus which can accurately make determination as to whether inputted image data is for a specific draft or not taking into account a case where the image data may be for a specified draft or not may be for a specific draft once subjected to particular deformation or processing such as size change, mirroring, inclination, color conversion, and painting.

It is another object of the present invention to provide an image processing apparatus in which a degree of severity in recognition of a specific draft can be switched according to user management or situation of use.

It is another object of the present invention to provide an image processing apparatus which can inhibit copying of an image not decisively determined as for a specific draft but suspected as for a specific draft.

These objects are achieved by an processing apparatus as set out in the claims.

In an image processing apparatus according to the present invention, if a specific draft determining means determines whether inputted image data received from a scanner or an external device is for a specific draft inhibited to be copied such as bills or securities, a data appending means adds data for a specific draft indicating a result of determination by the specific draft determining means to the image data to be outputted, so that, in a case where the image data is processed by an external device, output can be allowed by appending information that the image data to be outputted may be a specific draft to the image data.

In an image processing apparatus according to the present invention, if the specific draft determining means determines whether inputted image data received from a scanner or an external device is for a specific draft inhibited to be copied such as bills or securities, a data appending means adds data for a specific draft indicating a result of determination by the specific draft determining means to the image data to be outputted, so that, in a case where the image data is processed by an external device, output can be allowed by appending information that the image data to be outputted may be a specific draft to the image data. Also, in a case where the inputted image data is coded image data, and at the same time the data for a specific draft has not been added thereto, a decoding means does not execute the normal decoding operation.

In an image processing apparatus according to the present invention, the specific draft determining means makes determination by using the image data having been subjected to the specified image processing as to whether the inputted image data is for a specific draft or not in a case a new image processing is specified to the inputted image data, and the data appending means adds the data according to a latest result of determination outputted from the specific draft determining means, so that, even in a case where the inputted image data is treated as for a specific draft by subjecting the inputted image data to specified image processing, a result of determination can accurately be appended to the image data.

In an image processing apparatus according to the present invention, the specific draft determining means computes a degree of similarity between the inputted image data and a specific draft inhibited to be copied such as bills or securities and determines whether the inputted image data is for a specific draft or not, or deciding that any particular determination can not be made according to the degree of similarity therebetween, and then an inhibiting means inhibits operations for image processing or output of image data in a case where a result of determination by the specific draft determining means indicates that the inputted image data is for a specific draft, or in a case where a result of determination indicating that any particular determination can not be made is successively outputted a specified number of times or more.

In an image processing apparatus according to the present invention, the specific draft determining means computes a degree of similarity between the inputted image data and a specific draft inhibited to be copied such as bills or securities and determines whether the inputted image data is for a specific draft or not, or deciding that any particular determination can not be made according to the degree of similarity therebetween, and then the inhibiting means inhibits operations for image processing or output of image data in a case where enciphered code has been inputted and a result of determination by the specific draft determining means indicates that the inputted image data is for a specific draft, and also inhibits operations for image processing or output of image data in a case where enciphered code has not been inputted and a result of determination by the specific draft determining means indicates that the inputted image data is for a specific draft, or in a case where a result of determination by the specific draft determining means indicating that any particular determination can not be made is successively outputted a specified number of times or more.

In an image processing apparatus according to the present invention, the specific draft determining means computes a degree of similarity between the inputted image data and a specific draft inhibited to be copied such as bills or securities and determines whether the inputted image data is for a specific draft or not, or deciding that any particular determination can not be made according to the degree of similarity therebetween, and then the inhibiting means inhibits operations for image processing or output of image data in a case where user code has been inputted and a result of determination by the specific draft determining means indicates that the inputted image data is for a specific draft, and also inhibits operations for image processing or output of image data in a case where user code has not been inputted and a result of determination by the specific draft determining means indicates that the inputted image data is for a specific draft, or in a case where a result of determination by the specific draft determining means indicating that any particular determination can not be made is successively outputted a specified number of times or more.

In an image processing apparatus according to the present invention, the inhibiting means inhibits operations for image processing or output of image data, and also evades operation for forging a specific draft by preventing a draft from being taken out by locking the draft holding plate locking function.

In an image processing apparatus according to the present invention, the specific draft determining means computes a degree of similarity between the inputted image data and a specific draft inhibited to be copied such as bills or securities and determines whether the inputted image data is for a specific draft or not, or deciding that any particular determination can not be made according to the degree of similarity therebetween, and then a processing situation storage means stores situation of processing such as a date of determination or contents of image processing in a case where a result of determination by the specific draft determining means indicates that the inputted image data is for a specific draft, or that any particular determination can not be made.

In an image processing apparatus according to the present invention, the specific draft determining means computes a degree of similarity between the inputted image data and a specific draft inhibited to be copied such as bills or securities and determines whether the inputted image data is for a specific draft or not, or deciding that any particular determination can not be made according to the degree of similarity therebetween, and then an image data storage means stores image data to be outputted in a case where a result of determination by the specific draft determining means indicates that the inputted image data is for a specific draft, or that any particular determination can not be made.

In an image processing apparatus according to the present invention, the specific draft determining means makes determination by using image data having been subjected to the specified image processing as to whether the inputted image data is for a specific draft or not in a case where image processing associated with deformation or processing such as size change, mirroring, inclination, color conversion, or painting is specified to the inputted image data.

Other objects and features of this invention will become understood from the following description with reference to the accompanying drawings.

### BRIEF DESCRIPTION OF THE DRAWINGS

Fig. 1 is a block diagram showing a color digital copying machine with an external interface according to the present embodiment ; and
Fig. 2A, 2B and 2C are explanatory views showing a locking function according to the present embodiment.

### DESCRIPTION OF THE PREFERRED EMBODIMENT

Next, a detailed description is made for a color digital copying machine with an external interface as an embodiment of an image processing apparatus according to the present invention with reference to the related drawings.

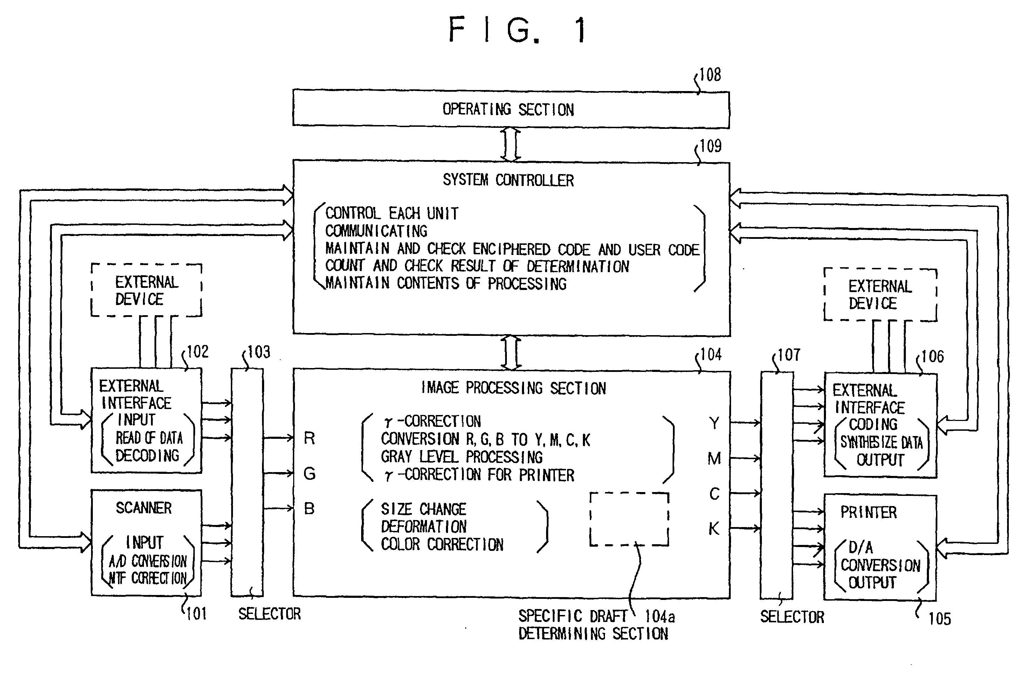

Fig. 1 shows configuration of a color digital copying machine with an external interface according to the present embodiment comprising a scanner 101 optically reading an image of a draft, subjecting the read image to A/D conversion (analog/digital conversion), MTF conversion or the like, and outputting the image as R, G, B data, an external interface 102 for receiving image data inputted from an external device, a selector 103 for receiving R, G, B data from the scanner 101 as well as from the external interface 102 and selectively outputting any of the image data, an image processing section 104 for receiving R, G, B data from the selector 103, subjecting the inputted image data to various types of image processing, and outputting the image data as Y, M, C, K data, a printer 105 for forming an image on recording paper according to the Y, M, C, K data outputted from the image processing section 104, an external interface 106 for outputting the Y, M, C, K data outputted from the image processing section 104 to an external device, a selector 107 for selectively outputting the Y, M, C, K data outputted from the image processing section 104 to either the printer 105 or external interface 106, an operating section 108 for executing various key input and message output, and a system controller 109 for controlling each of the components described above.

The image processing section 104 has an image processing function to subject inputted image data to various types of image processing such as a γ-correction, conversion from R, G, B data to Y, M, C, K data, gray level processing, or a γ -correction for a printer according to characteristics of a device (herein the printer 105) or processing mode of image data, an image processing function to subject inputted image data to deformation or processing such as size change, mirroring, inclination, color conversion, or painting according to specified conditions, and a specific draft determining function to determine whether or not inputted image data is for a specific draft inhibited to be copied such as bills and securities as shown in specific draft determining section.

The external interface 102 corresponds to a decoding means according to the present invention having a function to decode image data inputted from an external device, and a function to read data for a specific draft from image data inputted from the external device.

The external interface 106 corresponds to a coding means and a data appending means according to the present invention, and has a function to code image data to be outputted and a function to append data for a specific draft indicating a result of determination by the specific draft determining section 104a to the outputted image data.

The operating section 108 can input enciphered code and user code by making use of various types of key input described above.

The system controller 109 controls each section (each unit) as well as communications via the external interface 102 and external interface 106, and has a function to store, maintain and check enciphered code as well as user code, a function to count and check a result of determination by the specific draft determining means 104a, a function to store and maintain data for situation of processing such as date of determination or contents of image processing by the specific draft determining sections 104a, and a function to store and maintain image data according to a result of determination by the specific draft determining section 104a.

With the configuration described above, now description is made for operations of the image processing apparatus. In a case of ordinary processing for copying, namely in a case where an image of a draft is read by a scanner and the image data is inputted to the image processing apparatus, output from the scanner 101 is R, G, B data, and the R, G, B data is sent to the image processing section 104. In the image processing section 104, the R, G, B data is converted to density data by means of γ-correction , then the density data is converted to Y, M, C, K data by solving the masking equation, and furthermore the data is subjected to γ-correction for a printer according to characteristics of the printer.

Herein if the printer 105 is a printer having 4 sets of image forming unit, Y, M, C, K data is inputted from the image processing section 104 all at once, and a full-color image is formed on recording paper. Also in a case of a printer having only one set of image forming unit, Y, M, C, K data is sequentially converted from the R, G, B data and outputted in the image processing section 104 to execute image forming on recording paper 4 times, and thus a full-color image is formed by sequentially superimposing colors. Namely, in a case of a printer having only one set of image forming unit, scanning is executed by the scanner 101 4 times to form images for Y, M, C, and K respectively. Also when forming a full-color image with 3 colors of Y, M and C, scanning is executed 3 times.

On the other hand, in a case where external interfaces 102 and 106 are used the image data is sent to the image processing section 104 via the external interface 102 from the outside instead of the scanner 102, or the image data is outputted to various external devices via the external interface 106 instead of being outputted to the printer 105.

The image data subjected to various types of image processing in the image processing section 104 is sent to the specific draft determining section 104a in the image processing section 104, where determination is made as to whether the image data is for a specific draft inhibited to be copied such as bills or securities. At first the specific draft determining means 104a computes a degree of similarity between the processed image data and a specific drafts inhibited to be copied such as bills or securities, and the object image data is classified to 3 values of (T) indicating that the image data is for a specific draft, (F) indicating that the image is not for a specific draft, and (N) indicating that any decision can not be made for the image data according to the computed degree of similarity.

In this embodiment, determination as to whether image data is for a specific draft or not is made according to a degree of similarity. For instance, in a case where a degree of similarity is computed in a range from 0 % to 99 %, if a degree of similarity is more than 90 %, the image data is determined as (T) indicating that the image data is for a specific draft, if a degree of similarity is 69 % or less, the image data is determined as (F) indicating that the image data is not for a specific draft, and if a degree of similarity is smaller than 90 % and larger than 69 %, the image data is determined as (N) indicating that any particular decision can not be made for the image data.

A result of the determination (T, F, N) is sent to a system controller 109. The image data used in determination for a specific draft is then sent via a selector 107 to the printer 105 or external interface 106.

When a result of determination is inputted, the system controller 109 executes a processing for inhibiting copying as well as for appending data for a specific draft as described below according to the result of determination. At first, when outputting image data to the internal printer 105, if a result of determination indicates that the inputted image data is for a specific draft (T), output of the image data is stopped (inhibited) at the point of time. Concretely, all contents of the image data (assuming herein that the image data is based on 256 gray levels) is converted to "0" or "255", or driving of the printer 105 is stopped. Also, when outputting image data to an external device, the system controller 109 makes the external interface 106 execute a processing for appending data for a specific draft.

Next, a description is made for a method of appending data for a specific draft in the external interface 106. Image data is outputted in synchronism to a main scanning sync. signal (LSYNC), an auxiliary scanning sync. signal (FGATEB), and a pixel clock (CLK). In recent years, color image data has a resolution of around 400 dpi, 300 dpi, and 240 dpi, and is expressed with 8 bits for R, G, and B or Y, M, C, and K respectively (256 gray levels). Herein it is assumed that the lowest bit is data bit for a specific draft. However, in a case where data value is not more than 15, namely in a case where the upper 4 bits are zero (0), if any data is put in the lowest bit, a noise component becomes larger, so that, only when data value is 16 or more, the lowest bit is used as data bit.

Also it should be noted that, although the following description assumes that image data consists of 8 bits, the lowest bit can be used as data bit if the data consists of around 6 bits or more. In other cases, even if 1 bit is added as dedicated data bit, there occurs no substantial cost-related problem, so that a new bit is added, if necessary.

The external interface 106 traces data dot by dot in the main scanning direction, and the lowest bit in data consisting of 16 dots or more is stored in a memory (not shown herein). When 8 or more pieces of data each consisting of 16 dots or more has been detected, data sampling is finished. In a case where a number of pixels each comprising data of 16 or more dots is 7 or less, data for a specific draft is not appended to the line.

In a case where, even if 8-bit data has been sampled, a result of determination (T) is provided to the subsequent data with a value of 16 or more according to instruction of the system controller 109, only the lowest bits are rewritten with contents of the memory described above successively. When 8 pieces of data have been rewritten, again rewriting of data is started from the first bit. If a result of determination is (F), only the lowest bits are rewritten to data with contents in the memory above having been inverted.

If a result of determination is (N), of the 8 bits which are the lowest bits for 8 dots (pixels) each comprising first 16 or more bits stored in the memory described above, any 1 bits or several bits are inverted. Herein it is possible to append data corresponding to a similarity to a specific draft (for instance, a value indicating a degree of similarity) by specifying a bit or bits to be inverted. Also it is possible, by deciding bit or bits to be inverted, to determine, when any other bit has been inverted, that the data has not been appended correctly to the image data or the image data has been intentionally distorted (or modified). It should be noted that, as in case of data consisting of 6 bits or more, only the lowest bit is rewritten, any problem relating to the image quality does not occur, and it is regarded as a kind of noise in the output image.

On the other hand, in a case where image data is compressed (coded) in the external interface 106 and is outputted to an external device, as ADCT conversion or the like generally used for compression of multi-valued image is not reversible, it is impossible to store data for a specific draft according to a method in which the lowest bit in image data is used as data bit as described above. For this reason, in this case, when compressing image data by means of ADCT, data for specific data is appended using the lowest bit of a DC component signal. Coding of DC component is reversible, and coding may be executed after data for a specific draft is appended, and may not be executed. In this case, however, data is for each 8 x 8 x 8 pixel.

Next, a description is made for a processing of reading data for a specific daft in an external I/F. In a case where data for a specific draft has been appended to image data as described above, and at the same time the image data has not been coded, a lowest bit of 8 dots in a first 16 or more pieces of data for each line is sampled in the memory, and the lowest bit is checked for each dot in subsequent 16 or more pieces of data. In a case where any different data is in any portion, the portion is recognized as an image for a specific draft.

Also in a case where the coded data is received from an external device, data for a specific draft is checked only for its DC component signal. The data for a specific draft is transferred to a system controller 109, treated like a result of determination by the specific draft determining section 104a, and control for inhibition is executed.

In this operation, in a case where the image is subjected to processing and then outputted to an external device, determination is made by the specific draft determining section 104a as to whether the image data is for a specific draft or not after having been subjected to various types of image processing, the data for a specific draft is added in the external I/F 106. For this reason, even in a case where the data for a specific draft appended to the inputted image data indicates (T), the image is determined as (N) by the specific draft determining section 104a, (N) as data for a specific draft is added thereto in the external I/F 106 and outputted in a case where the image data after having been subjected to image processing is treated not as that for a specific draft. And also even in a case where the data for a specific draft added to the inputted image data indicates (N), the image is determined as (T) by the specific draft determining section 104a, (T) as data for a specific draft is added thereto in the external I/F 106 and outputted in a case where the image data after having been subjected to image processing is treated as that for a specific draft. Furthermore, the external I/F 102 decodes the image data by being subjected to processing in which DC component is set to zero (0) in a case where data for a specific draft is not accurately appended thereto (or is not appended thereto).

The system controller 109 always checks any of which (T), (F), or (N) a result of determination to the inputted image data is, and when the result is (T), a processing to prevent the image from being normally outputted is executed. Also, normal output of the image is stopped until when a state (F) since succession of a state of (N) is computed, and reaches a prespecified number of times C is recognized.

Also the system controller 109 requires, if the state (N) is recognized, input of enciphered code by an operator, and if the enciphered code is inputted through the operating section 108, the enciphered code is compared to the previously stored enciphered code, then if it is correct, the image data is outputted. Herein, in a case where enciphered code is not inputted within a specified period of time, or in a case where the inputted enciphered code is not coincident to the previously stored enciphered code, the image data is abandoned and each section of the apparatus is returned to its initial state.

Also herein, the operator may be asked to again input the enciphered code before the image data is abandoned so that the inputted enciphered code is again compared to the previously stored enciphered code.

Furthermore, a plurality of enciphered code may be previously prepared, allocated as user code to each user or each section a user belongs to so that each user can input the user code as described above to be compared to the previously stored enciphered code. With this operation, even in case of image for a specific draft being abused, it becomes easier to pursue the cause because users are put under more strict management.

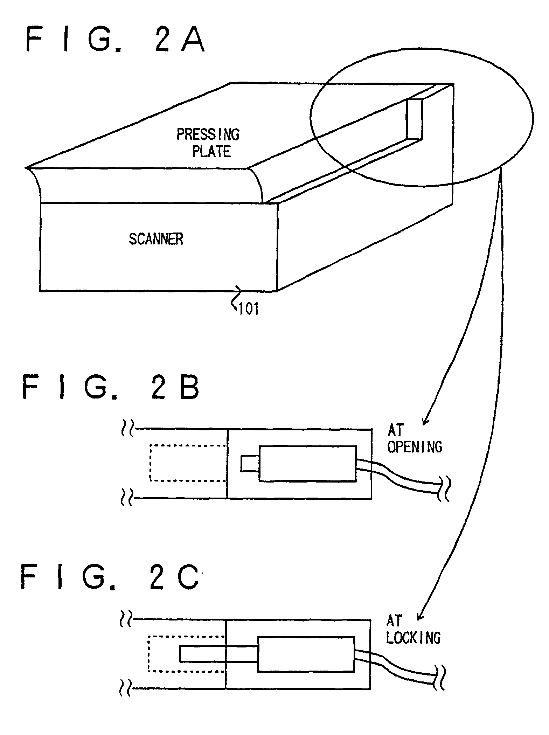

As shown in Fig. 2A to Fig. 2C, if the case where the inputted image data from the scanner 101 is determined as for a specific draft (T), the locking function is controlled by the system controller 109 by providing a locking function in a pressing plate section of a scanner 101 (a draft holding plate), so that the draft can not be taken out, which makes it possible to effectively suppress to copy a specific draft.

Also when it is determined that the image data is for a specific draft (T) or that any determination can not be made (N) regardless of the scanner 101 or the external I/F 102 from which image data is received, the system controller 109 stores the image data in an internal memory (not shown herein). And also such data as the date of determination or the contents of image processing at the time described above may be stored at the point of time in the internal memory (not shown herein) as situation of processing. With this operation, it becomes possible to specify or assume the inputted image data itself.

It should be noted that, in a case where the image data is stored in the internal memory, a method of storing image data compressed or storing only an important portion thereof for determination may be employed to reduce a required memory capacity.

In the present embodiment as described above, determination is made as to whether inputted image data is for a specific draft or not, and a result of the determination is appended to image data to be outputted as data for a specific draft, so that copying and forging of a specific draft can be prevented even in a case where only image data is transferred through the external I/F 106 without being actually outputted onto recording paper.

Also in a case where data for a specific draft has not been appended to inputted image data through the external I/F 102, normal processing (normal decoding) can not be executed, so that data for a specific draft is always appended to image data in a case where it is expected to receive normal image data from an external device and obtain a normal image.

Also even in a case where certain image data is determined as for a specific draft or not as that for a specific draft according to change in a criteria for determination in each image processing, an accurate result of determination to image data to be outputted can always be obtained, and also the obtained result can be appended thereto as data for a specific draft.

In determination as to whether the image data is for a specific draft or not, in a case where a state indicating that any determination can not be made (N) is successively continued, it is possible to inhibit copying of the image like in a case where it is determined that the image data is for a specific draft (T), so that copying or forging can be prevented without fail even in a case where the image can not precisely be determined not as that for a specific draft.

Also a user is managed with his enciphered code or user code, and a criteria for determination as to whether the image is for a specific draft or not can be made severer to users other than the authorized users.

Also it is possible to inhibit with the interlock mechanism for a draft to be taken out, so that the apparatus can be identified simultaneously when copying or forging is executed.

Also in a case where it is determined that an image is for a specific draft (T) and that any particular determination can not be made (N), the image data is stored, so that the specific draft can easily be checked afterwards.

Also in a case where it is determined that an image is for a specific draft (T) and that any particular determination can not be made (N), date of the determination or the contents of image processing is stored as situation of processing, so that the situation of copying or forging thereof can clearly be defined.

As described above, in the image processing apparatus according to the present invention for receiving image data from a scanner or an external device, subjecting the inputted image data to various types of image processing, and then outputting the image data, the image processing apparatus comprises a specific draft determining means for determining whether the inputted image data is for a specific draft inhibited to be copied such as bills or securities, and a data appending means for appending data for a specific draft indicating a result of determination by the specific draft determining means to the image data to be outputted, so that, in a case where, for instance, the image data is to be processed by an external device, output thereof can be allowed by appending information that the image data to be outputted may be a specific draft to the image data.

In the image processing apparatus according to the present invention for receiving image data from a scanner or an external device, subjecting the inputted image data to various types of image processing, and then outputting the image data, the image processing apparatus comprises a decoding means for decoding image data in a case where the inputted image data is coded image data, a coding means for coding image data having been subjected to the various types of image processing, a

## Claims

1. An image processing apparatus for receiving image data from a scanner or an external device, subjecting the inputted image data to various types of image processing which results in sequences (Y, M, C, K) of bits which represent the image to be printed, wherein the respective sequences express values which respectively represent the grey level of the colour of a dot of image data, and then outputting the image data, comprising:
a specific draft determining means for determining whether said inputted image data is for a specific draft inhibited to be copied such as bills or securities; and
a data appending means for appending data for a specific draft indicating a result of determination by said specific draft determining means to the outputted data, said data being appended by adding one bit or several bits to one or more of said sequences or by rewriting one bit or several bits of one or more of said sequences at that side of the sequence which has the least influence on the value represented by the sequence, said data controlling the further processing of the image data by an external device.

2. An image processing apparatus according to claim 1, wherein the rewriting is only performed if the value represented by the sequence to be rewritten is above a predetermined value.

3. An image processing apparatus for receiving image data from a scanner or an external device, subjecting the inputted image data to various types of image processing, and then outputting the image data comprising:
a decoding means for decoding image data when said inputted image data is coded image data;
a coding means for coding image data having been subjected to said various types of image processing;
a specific draft determining means for determining whether said inputted image data is for a specific draft inhibited to be copied such as bills or securities; and
a data appending means for appending data for a specific draft indicating a result of determination by said specific draft determining means to said coded image data, wherein said appending of specific draft information is executed by using information bits in a section to be encoded according to a reversible method, or in a section not to be encoded, said appended data controlling the further processing of the image data by an external device;
and wherein said decoding means does not execute the normal decoding operation if said inputted image data is coded image data and at the same time said data for a specific draft has not been appended to the image data.

4. An image processing apparatus according to claim 1 to 3, wherein said specific draft determining means makes determination, when a new image processing is specified to said inputted image data, as to whether said inputted image is for a specific draft or not by using image data having been subjected to the specified image processing, and said data appending means adds said data according to a latest result of determination outputted from said specific draft determining means.

5. An image processing apparatus according to claim 1 to 3, wherein said specific draft determining means determines whether said inputted image data is for a specific draft or not, or decides that any particular determination can not be made according to the degree of similarity therebetween; and,
said image processing apparatus comprises
an inhibiting means for inhibiting operations for image processing or output of image data in a case where a result of determination above indicates that the inputted image data is for a specific draft, or in a case where a result of determination indicating that any particular determination can not be made is outputted successively a specified number of times or more.

6. An image processing apparatus according to claim 1 to 3, comprising
a storage means with enciphered code previously stored therein;
an inputting means for inputting enciphered code; and wherein said specific draft determining means determines whether said inputted image data is for a specific draft or not, or deciding that any particular determination can not be made according to the degree of similarity therebetween; and further comprising:
an inhibiting means for inhibiting operations for image processing our output of image data when enciphered code has been inputted and a result of determination by said specific draft determining means indicates that the inputted image data is for a specific draft, and also for inhibiting operations for image processing or output of image data in a case where enciphered code has not been inputted and a result of determination by the specific draft determining means indicates that the inputted image data is for a specific draft, or a result of determination indicating that any particular determination can not be made is successively outputted a specified number of times or more.

7. An image processing apparatus according to claim 1 to 3, comprising:
a storage means with user code previously set to each user stored therein; an inputting means for inputting user code; and wherein said specific draft determining means determines whether said inputted image data is for a specific draft or not, or decides that any particular determination can not be made according to the degree of similarity therebetween; and further comprising:
an inhibiting means for inhibiting operations for image processing or output of image data when user code has been inputted and a result of determination by said specific draft determining means indicates that the inputted image data is for a specific draft, and also for inhibiting operations for image processing or output of image data in a case where user code has not been inputted and a result of determination by the specific draft determining means indicates that the inputted image data is for a specific draft, or a result of determination indicating that any particular determination can not be made is successively outputted a specified number of times or more.

8. An image processing apparatus according to claim 5, 6 or 7, wherein said scanner has a draft holding plate and a locking function to lock the draft holding plate, and said inhibiting means inhibits operations for image processing or output of image data and also prevents a draft from being taken out by locking said draft holding plate locking function.

9. An image processing apparatus according to claim 1 to 3, wherein said specific draft determining means determines whether said inputted image data is for a specific draft or not, or deciding that any particular determination can not be made according to the degree of similarity therebetween; and further comprising:
a processing situation storage means for storing situation of processing such as a date of determination or contents of image processing in a case where a result of determination by said specific draft determining means indicates that the inputted image data is for a specific draft, or that any particular determination can not be made.

10. An image processing apparatus according to claim 1 to 3, wherein a specific draft determining means determines whether said inputted image data is for a specific draft or not, or decides that any particular determination can not be made according to the degree of similarity therebetween; and further comprising:
an image data storage means for storing the outputted image data in a case where a result of determination by said specific draft determining means indicates that the inputted image data is for a specific data or that any particular determination can not be made.

11. An image processing apparatus according to claim 1 to 11, wherein said specific draft determining means makes determination by using the image data having been subjected to the specified image processing as to whether the inputted image data is for a specific draft or not in a case where image processing associated with deformation or processing such as size change, mirroring, inclination, colour conversion, or painting is specified to said inputted image data.

## Patentansprüche

1. Bildverarbeitungsapparat zum Empfangen von Bilddaten von einem Scanner oder einer externen Vorrichtung, der die eingegebenen Bilddaten verschiedenen Typen von Bildverarbeitung unterzieht, was in Sequenzen (Y, M, C, K) von Bits resultiert, die das zu druckende Bild darstellen, wobei die jeweiligen Sequenzen Werte ausdrücken, die jeweilig den Graupegel der Farbe eines Punktes von Bilddaten darstellen, und wobei dann die Bilddaten ausgegeben werden, umfassend:
ein spezifisches Vorlagen-Bestimmungsmittel zum Bestimmen, ob die eingegebenen Bilddaten für eine spezifische Vorlage sind bzw. eine spezifische Vorlage betreffen, die nicht kopiert werden darf, wie beispielsweise Banknoten oder Wertpapiere; und
ein Datenanfügemittel, um Daten für eine spezifische Vorlage, die ein Ergebnis der Bestimmung durch das spezifische Vorlagen-Bestimmungsmittel anzeigen, an die ausgegebenen Daten anzufügen, indem ein Bit oder mehrere Bits zu einer oder mehreren der Sequenzen hinzugefügt wird, oder indem ein Bit oder mehrere Bits einer oder mehrerer der Sequenzen auf jener Seite der Sequenz neu geschrieben wird, die den geringsten Einfluss auf den Wert hat, der durch die Sequenz dargestellt wird, wobei die Daten die weitere Verarbeitung der Bilddaten durch eine externe Vorrichtung steuern.

2. Bildverarbeitungsapparat nach Anspruch 1, bei welchem das Neuschreiben nur durchgerührt wird, falls der Wert, der durch die Sequenz dargestellt wird, die neu zu schreiben ist, oberhalb eines vorbestimmten Werts liegt.

3. Bildverarbeitungsapparat, um Bilddaten von einem Scanner oder einer externen Vorrichtung zu empfangen, die eingegebenen Bilddaten verschiedenen Typen von Bildverarbeitung zu unterziehen, und dann die Bilddaten auszugeben, umfassend:
ein Kodiermittel, um Bilddaten zu dekodieren, wenn die eingegebenen Bilddaten kodierte Bilddaten sind;
ein Kodiermittel, um Bilddaten zu kodieren, die verschiedenen Typen einer Bildverarbeitung unterzogen worden sind;
ein spezifisches Vorlagen-Bestimmungsmittel, um zu bestimmen, ob die eingegebenen Bilddaten für eine spezifische Vorlage sind bzw. diese betreffen, die nicht kopiert werden darf, wie beispielsweise Banknoten oder Wertpapiere; und
ein Datenanfügemittel, um Daten für eine spezifische Vorlage bzw. betreffend eine spezifische Vorlage, die ein Ergebnis einer Bestimmung durch das spezifische Vorlage-Bestimmungsmittel anzeigen, an die kodierte Bilddaten anzufügen, wobei das Anfügen der spezifischen Vorlagen-Information ausgeführt wird, indem Informationsbits in einem Abschnitt, der gemäß einem reversiblen Verfahren zu kodieren ist, oder in einem Abschnitt, der nicht zu kodieren ist, verwendet werden, wobei die angefügten Daten die weitere Verarbeitung der Bilddaten durch eine externe Vorrichtung steuern;
und wobei das Dekodiermittel nicht die normale Dekodieroperation ausführt, falls die eingegebenen Bilddaten kodierte Bilddaten sind und gleichzeitig die Daten für eine spezifische Vorlage nicht an die Bilddaten angehängt worden sind.

4. Bildverarbeitungsapparat gemäß Anspruch 1 bis 3, bei welchen das spezifische Vorlagen-Bestimmungsmittel eine Bestimmung durchführt, wenn eine neue Bildverarbeitung für die eingegebenen Bilddaten spezifiziert ist, und zwar diesbezüglich, ob die eingegebenen Bilddaten für eine spezifische Vorlage sind bzw. diese betreffen oder nicht, indem Bilddaten verwendet werden, die der spezifischen Bildverarbeitung unterzogen worden sind, und wobei das Datenanfügemittel die Daten gemäß einem letzten bzw. neuesten Ergebnis der Bestimmung, das von dem spezifischen Vorlagen-Bestimmungsmittel ausgegeben wurde, hinzufügt.

5. Bildverarbeitungsapparat gemäß Anspruch 1 bis 3, bei welchem das spezifische Vorlagen-Bestimmungsmittel bestimmt, ob die eingegebenen Bilddaten für eine spezifische Vorlage sind bzw. diese betreffen oder nicht, oder entscheidet, dass eine bestimmte Bestimmung nicht gemäß den Grad der Ähnlichkeit dazwischen durchgeführt werden kann; und
der Bildverarbeitungsapparat ein Verhinderungsmittel umfasst, um Operationen zur Bildverarbeitung oder Ausgabe von Bilddaten in einem Fall, wo ein Ergebnis der obigen Bestimmung anzeigt, dass die eingegebenen Bilddaten für eine spezifische Vorlage sind bzw. diese betreffen, oder in einem Fall, wo ein Ergebnis der Bestimmung, das anzeigt, dass eine bestimmte Bestimmung nicht durchgeführt werden kann, aufeinanderfolgend eine vorbestimmte Anzahl von Malen oder mehr bzw. mit einer vorbestimmten Häufigkeit oder mehr ausgegeben wird, zu verhindern.

6. Bildverarbeitungsapparat nach Anspruch 1 bis 3, der ein Speichermittel mit darin gespeichertem verschlüsseltem Code umfasst;
ein Eingabemittel, um verschlüsselten Code einzugeben; und wobei das spezifische Vorlagen-Bestimmungsmittel bestimmt, ob die eingegebenen Bilddaten für eine spezifische Vorlage sind bzw. diese betreffen oder nicht, oder entscheidet, dass eine bestimmte Bestimmung gemäß dem Grad der Ähnlichkeit dazwischen nicht durchgeführt werden kann; und der weiter folgendes umfasst:
ein Verhinderungsmittel, um Operationen für eine Bildverarbeitung oder Ausgabe von Bilddaten zu verhindern, wenn verschlüsselter Code eingegeben worden ist und ein Ergebnis der Bestimmung durch das spezifische Vorlagen-Bestimmungsmittel anzeigt, dass die eingegebenen Bilddaten für eine spezifische Vorlage sind bzw. diese betreffen, und ebenso um Operationen für eine Bildverarbeitung oder Ausgabe von Bilddaten in einem Fall zu verhindern, wo verschlüsselter Code nicht eingegeben worden ist und ein Ergebnis der Bestimmung durch das spezifische Vorlagen-Bestimmungsmittel anzeigt, dass die eingegebenen Bilddaten für eine spezifische Vorlage sind, oder wo ein Ergebnis, das anzeigt, dass eine bestimmte Bestimmung nicht gemacht werden kann, aufeinanderfolgend eine bestimmte Anzahl von Malen oder mehr bzw. mit einer vorbestimmten Häufigkeit oder mehr ausgegeben wird.

7. Bildverarbeitungsapparat gemäß Anspruch 1 bis 3, der folgendes umfasst:
ein Speichermittel mit Benutzercode, der zuvor für jeden Benutzer, der darin gespeichert ist, eingestellt wurde;
ein Eingabemittel, um Benutzercode einzugeben; und wobei das spezifische Vorlagen-Bestimmungsmittel bestimmt, ob die eingegebenen Bilddaten für eine spezifische Vorlage sind oder nicht, oder entscheidet, dass eine bestimmte Bestimmung gemäß dem Grad der Ähnlichkeit dazwischen nicht gemacht werden kann; und der weiter folgendes umfasst:
ein Verhinderungsmittel, um Operationen zur Bildverarbeitung oder Ausgabe von Bilddaten zu verhindern, wenn ein Benutzercode eingegeben worden ist und ein Ergebnis der Bestimmung durch das spezifische Vorlagen-Bestimmungsmittel anzeigt, dass die eingegebenen Bilddaten für eine spezifische Vorlage sind bzw. diese betreffen, und ebenso, um Operationen zur Bildverarbeitung oder Ausgabe eines Bildes in einem Fall zu verhindern, wo Benutzercode nicht eingegeben worden ist und ein Ergebnis der Bestimmung durch das spezifische Vorlagen-Bestimmungsmittel anzeigt, dass die eingegebenen Bilddaten für eine spezifische Vorlage sind bzw. diese betreffen, oder wo ein Ergebnis der Bestimmung, das anzeigt, dass eine bestimmte Bestimmung nicht durchgeführt werden kann, aufeinanderfolgend eine vorbestimmte Anzahl von Malen oder mehr bzw. mit einer vorbestimmten Häufigkeit oder mehr ausgegeben wird.

8. Bildverarbeitungsapparat nach Anspruch 5, 6 oder 7, bei welchem der Scanner eine Vorlagenhalteplatte und eine Verriegelungsfunktion hat, um die Vorlagenhalteplatte zu verriegeln, und das Verhinderungsmittel Operationen zur Bildverarbeitung oder Ausgabe von Bilddaten verhindert und ebenso verhindert, dass eine Vorlage herausgenommen wird, indem die Vorlagehalteplatten-Verriegelungsfunktion verriegelt wird.

9. Bildverarbeitungsapparat gemäß Anspruch 1 bis 3, bei welchem das spezifische Vorlagen-Bestimmungsmittel bestimmt, ob die eingegebenen Bilddaten eine spezifische Vorlage betreffen oder nicht, oder entscheidet, dass eine bestimmte Bestimmung gemäß dem Grad der Ähnlichkeit dazwischen nicht gemacht werden kann; und der weiter folgendes umfasst:
ein Verarbeitungssituation-Speichermittel, um eine Situation der Verarbeitung, wie beispielsweise ein Datum der Bestimmung oder Inhalte einer Bildverarbeitung in einem Fall zu speichern, wo ein Ergebnis der Bestimmung durch das spezifische Vorlagen-Bestimmungsmittel anzeigt, dass die eingegebenen Bilddaten für eine spezifische Vorlage sind bzw. diese betreffen, oder dass eine bestimmte Bestimmung nicht gemacht werden kann.

10. Bildverarbeitungsapparat nach Anspruch 1 bis 3, bei welchem ein spezifisches Vorlagen-Bestimmungsmittel bestimmt, ob die eingegebenen Bilddaten für eine spezifische Vorlage sind bzw. diese betreffen oder nicht, oder entscheidet, dass eine bestimmte Bestimmung gemäß dem Grad der Ähnlichkeit dazwischen nicht durchgeführt werden kann; und der weiter folgendes umfasst:
ein Bilddaten-Speichermittel, um die ausgegebenen Bilddaten in einem Fall zu speichern, wo ein Ergebnis der Bestimmung durch das spezifische Vorlagen-Bestimmungsmittel anzeigt, dass die eingegebenen Bilddaten für eine spezifische Vorlage sind oder dass eine bestimmte Bestimmung nicht gemacht werden kann.

11. Bildverarbeitungsapparat nach Anspruch 1 bis 11, bei welchem das spezifische Vorlagen-Bestimmungsmittel eine Bestimmung durchführt, indem die Bilddaten verwendet werden, die einer spezifischen Bildverarbeitung unterzogen worden sind, und zwar dahingehend, ob die eingegebenen Bilddaten für eine spezifische Vorlage sind bzw. diese betreffen oder nicht, und zwar in einem Fall, wo eine Bildverarbeitung, die mit einer Verformung oder Verarbeitung, wie beispielsweise einer Größenänderung, einem Spiegeln, einer Neigung, einer Farbkonversion oder einer Bemalung bzw. einem Zeichnen in Zusammenhang steht, für die eingegebenen Bilddaten spezifiziert worden ist.

## Revendications

1. Appareil de traitement d'image afin de recevoir des données d'image d'un scanner ou d'un dispositif extérieur, soumettant les données d'image entrées à différents types de traitement d'image qui se traduit par des séquences binaires (Y, M, C, K) qui représentent l'image à imprimer, dans lequel les séquences respectives expriment des valeurs qui représentent respectivement le niveau de gris de la couleur d'un point de données d'image et délivrant ensuite les données d'image, comprenant :
un moyen de détermination d'un dessin particulier afin de déterminer si lesdites données d'image entrées représentent un dessin particulier de reproduction interdite tel que des billets de banque ou des titres ; et
un moyen d'adjonction de données afin d'ajouter des données pour un dessin particulier indiquant un résultat de détermination par lesdits moyens de détermination de dessin particulier aux données délivrées, lesdites données étant ajoutées en additionnant un ou plusieurs bits à une ou plusieurs desdites séquences ou en réécrivant un ou plusieurs bits d'une ou de plusieurs desdites séquences sur le côté de la séquence qui a la moindre influence sur la valeur représentée par la séquence, lesdites données contrôlant l'autre traitement des données d'image par un dispositif extérieur.

2. Appareil de traitement d'image selon la revendication 1, dans lequel la réécriture est seulement effectuée si la valeur représentée par la séquence à réécrire est supérieure à une valeur prédéterminée.

3. Appareil de traitement d'image afin de recevoir des données d'image d'un scanner ou d'un dispositif extérieur, soumettant les données d'image entrées à différents types de traitement d'image, et délivrant ensuite les données d'image, comprenant :
un moyen de décodage afin de décoder les données d'image lorsque lesdites données d'image entrées sont des données d'image codées ;
un moyen de codage pour coder les données d'image ayant été soumises auxdits différents types de traitement d'image ;
un moyen de détermination de dessin particulier pour déterminer si lesdites données d'image entrées représentent un dessin particulier de reproduction interdite tel que des billets de banque ou des titres ; et
un moyen d'adjonction de données afin d'ajouter des données à un dessin particulier indiquant un résultat de la détermination par lesdits moyens de détermination de dessin particulier auxdites données d'image codées, dans lequel ladite adjonction d'information de dessin particulier est exécutée en utilisant des bits d'information dans une section à coder selon un procédé réversible, ou dans une section à ne pas coder, lesdites données ajoutées contrôlant l'autre traitement des données d'image par un dispositif extérieur, et dans lequel lesdits moyens de décodage n'exécutent pas l'opération de décodage normale si lesdites données d'image entrées sont des données d'image codées et simultanément si lesdites données pour un dessin particulier n'ont pas été ajoutées aux données d'image.

4. Appareil de traitement d'image selon les revendications 1 à 3, dans lequel lesdits moyens de détermination de dessin particulier effectuent une détermination, lorsqu'un nouveau traitement d'image est spécifié pour lesdites données d'image entrées, si ladite image d'entrée concerne un dessin particulier ou non en utilisant des données d'image ayant été soumises au traitement d'image spécifié, et lesdits moyens d'adjonction de données ajoutent lesdites données selon le dernier résultat de détermination délivré par lesdits moyens de détermination de dessin particulier.

5. Appareil de traitement d'image selon les revendications 1 à 3, dans lequel lesdits moyens de détermination de dessin particulier déterminent si lesdites données entrées concernent un dessin particulier ou non, ou décident qu'une détermination particulière ne peut pas. être faite selon le degré de similitude entre eux ; et,
ledit appareil de traitement d'image comporte
un moyen de blocage afin d'empêcher des opérations en vue d'un traitement d'image ou de délivrer des données d'image dans un cas où un résultat de détermination ci-dessus indique que les données d'image entrées concernent un dessin particulier, ou dans un cas où un résultat de détermination indiquant qu'une détermination particulière quelconque ne peut pas être faite est délivré successivement un nombre spécifié de fois ou plus.

6. Appareil de traitement d'image selon les revendications 1 à 3, comportant un moyen de mémoire à code chiffré préalablement mémorisé à l'intérieur;
un moyen d'entrée afin d'entrer un code chiffré, et dans lequel lesdits moyens de détermination de dessin particulier déterminent si lesdites données d'image entrées concernent un dessin particulier ou non décidant qu'une détermination particulière ne peut pas être faite selon le degré de similitude entre elles ; et comprenant en outre :
un moyen de blocage afin d'empêcher des opérations en vue d'un traitement d'image ou de délivrance de données d'image lorsqu'un code chiffré a été entré et qu'un résultat de détermination par lesdits moyens de détermination de dessin particulier indiquent que les données d'image entrées concernent un dessin particulier, et également pour empêcher des opérations en vue d'un traitement d'image ou délivrer des données d'image dans un cas où un code chiffré n'a pas été entré et qu'un résultat de détermination par les moyens de détermination de dessin particulier indique que les données d'image entrées concernent un dessin particulier, ou qu'un résultat de détermination indiquant qu'une détermination particulière ne peut pas être faite est successivement délivré un nombre spécifié de fois ou plus.

7. Appareil de traitement d'image selon les revendications 1 à 3, comprenant :
un moyen de mémoire avec un code d'utilisateur préalablement fixé pour chaque utilisateur mémorisé à l'intérieur ;
un moyen d'entrée pour entrer un code d'utilisateur ; et dans lequel lesdits moyens de détermination de dessin particulier déterminent si lesdites données d'image entrées concernent un dessin particulier ou non, ou décident qu'une détermination particulière ne peut pas être effectuée selon le degré de similitude entre elles; et comprenant en outre :
un moyen de blocage en vue d'empêcher des opérations en vue d'un traitement d'image ou une délivrance de données d'image lorsqu'un code d'utilisateur a été entré et qu'un résultat de détermination par lesdits moyens de détermination de dessin particulier indique que les données d'image entrées concernent un dessin particulier, et également pour empêcher des opérations en vue d'un traitement d'image ou de délivrance de données d'image dans un cas où un code d'utilisateur n'a pas été entré et qu'un résultat de détermination par les moyens de détermination de dessin particulier indique que les données d'image entrées concernent un dessin particulier, ou qu'un résultat de détermination indiquant qu'une détermination particulière ne peut pas être faite a été successivement délivrée un nombre spécifié de fois ou plus.

8. Appareil de traitement d'image selon la revendication 5, 6 ou 7, dans lequel ledit scanner possède une plaque de retenue de dessin et une fonction de verrouillage pour verrouiller la plaque de retenue du dessin, et lesdits moyens de blocage empêchent des opérations en vue d'un traitement d'image ou de délivrance de données d'image et également empêchent un dessin d'être prélevé en verrouillant ladite fonction de verrouillage de la plaque de retenue de dessin.

9. Appareil de traitement d'image selon la revendication 1 à 3, dans lequel lesdits moyens de détermination de dessin particulier déterminent si lesdites données d'image entrées concernent un dessin particulier ou non, ou décident qu'une détermination particulière ne peut pas être faite selon le degré de similitude entre elles ; et comprenant en outre :
un moyen de mémoire de situation de traitement pour mémoriser une situation de traitement telle qu'une date de détermination ou de contenu de traitement d'image dans un cas où un résultat de détermination par lesdits moyens de détermination de dessin particulier indique que les données d'image entrées concernent un dessin particulier, ou qu'une détermination particulière ne peut pas être effectuée.

10. Appareil de traitement d'image selon une des revendications 1 à 3, dans lequel des moyens de détermination de dessin particulier déterminent si lesdites données d'image entrées concernent un dessin particulier ou non, ou décident qu'une détermination particulière ne peut pas être effectuée selon le degré de similitude entre elles; et comprenant en outre :
un moyen de mémoire de données d'image pour mémoriser les données d'image délivrées dans un cas où un résultat de détermination par lesdits moyens de détermination de dessin particulier indique que les données d'image entrées concernent un dessin particulier ou qu'une détermination particulière ne peut pas être effectuée.

11. Appareil de traitement d'image selon une des revendications 1 à 10, dans lequel lesdits moyens de détermination de dessin particulier effectuent une détermination en utilisant les données d'image ayant été soumises au traitement d'image spécifié, si les données d'image entrées concernent un dessin particulier ou non dans un cas où un traitement d'image associé à une déformation ou un traitement tel qu'une variation de dimension, création d'une image spéculaire, inclinaison, conversion de couleur, ou coloriage est spécifié pour lesdites données d'image entrées.
